# EUROPÄISCHE PATENTSCHRIFT

(11) **EP 0 522 370 B1**
(45) Veröffentlichungstag und Bekanntmachung des Hinweises auf die Patenterteilung: **17.09.1997**
(21) Anmeldenummer: 92110824.7
(22) Anmeldetag: 26.06.1992
(51) Int. Cl.: C08K 3/00, C09C 1/00, B41M 1/30

(54) **Pigmenthaltige Kunststoff-Formmasse**
Polymeric moulding composition containing pigment
Composition à mouler synthétique contenant du pigment

(30) Priorität: 29.06.1991 DE 4121676
(43) Veröffentlichungstag der Anmeldung: 13.01.1993
(73) Patentinhaber: HOECHST AKTIENGESELLSCHAFT, 65926 Frankfurt am Main (DE)
(72) Erfinder: Hess, Gerhard, W-6238 Hofheim am Taunus (DE); Haack, Ulrich, W-6146 Alsbach 1 (DE); Kurz, Klaus, Dr., W-6238 Hofheim am Taunus (DE)

(56) Entgegenhaltungen:
- EP-A- 53 256
- EP-A- 0 101 667
- EP-A- 0 247 765
- EP-A- 0 327 384
- EP-A- 0 330 869
- EP-A- 0 456 471
- DE-A- 1 805 906
- Kirk-Othmer Encyclopedia of Chemical Technology, Band 17, 1982, Seiten 829-831.

## Beschreibung

Die Erfindung betrifft eine Kunststoff-Formmasse, enthaltend mindestens ein organisches Polymer und mindestens ein kohlenstoffhaltiges Pigment, sowie die Verwendung einer solchen Kunststoff-Formmasse als Ausgangsmaterial für die Herstellung von geformten Gegenständen, die mit Hilfe von LASER-Strahlung mit Zeichen versehen werden können.

Es ist bekannt, daß Teile aus Kunststoff mit Zeichen versehen werden, wenn der Kunststoff einen Füllstoff enthält, der sich bei Einwirkung von Energiestrahlung verfärbt, und die Oberfläche der Teile einer Energiestrahlung ausgesetzt wird; hierbei wird als Energiestrahlung ein ablenkbarer, fokussierbarer Energiestrahl, vorzugsweise ein LASER-Strahl, verwendet (DE-PS 2 936 926 = EP-A 27 532). Als Kunststoffmaterial dient insbesondere Polyacetal, und als Füllstoff wird Ruß oder Graphit eingesetzt, vorzugsweise in einer Konzentration von 0,08 bis 0,125 Prozent; dem Pigment kann noch ein optischer Aufheller beigemischt sein, der durch die LASER-Einwirkung nicht zerstört wird (DE-PS 3 044 722 = EP-PS 53 256).

Ferner ist ein Verfahren zur Beschriftung von hochmolekularem Material bekannt, das mindestens einen strahlungsempfindlichen, eine Verfärbung verursachenden Zusatzstoff enthält, wobei man als Energiestrahlung LASER-Licht, dessen Wellenlänge im nahen UV- und/oder sichtbaren und/oder nahen IR-Bereich liegt, und als Zusatzstoff mindestens ein anorganisches und/oder organisches Pigment und/oder einen polymerlöslichen Farbstoff verwendet. Das hochmolekulare Material ist vor allem ein vollsynthetischer organischer Polyplast, d. h. ein Kunststoff, der durch Polymerisation, Polykondensation oder Polyaddition hergestellt ist, u. a. Polyolefin, Polyester, Polyamid, Polyether und Polyacetal, oder auch ein Gemisch solcher Polyplaste. Beispiele von anorganischen Pigmenten sind Weißpigmente, Metalloxide, Metallsulfide sowie Ruß und Graphit, wobei die metallhaltigen Pigmente bevorzugt sind. Die Menge des Zusatzstoffs beträgt 0,001 bis 10 Gewichtsprozent (bezogen auf das hochmolekulare Material). Als Strahlungsquelle dienen gepulste LASER z. B. Festkörper-Puls-LASER, mit Puls modifizierte Dauerstrich-LASER, Metalldampf-LASER und Halbleiter-LASER (EP-A 190 997).

Ebenfalls bekannt ist ein Verfahren zur LASER-Beschriftung von hochmolekularem organischen Material in Form von Gegenständen, Folien und Filmen, wonach das Material, das mindestens einen strahlungsempfindlichen ausbleichbaren Zusatzstoff und mindestens eine weniger strahlungsempfindliche nicht ausbleichende Verbindung enthält, einem LASER-Strahl ausgesetzt ist; dabei wird gepulstes LASER-Licht verwendet, dessen Wellenlänge in nahen UV- und/oder sichtbaren Bereich liegt, als ausbleichbarer Zusatzstoff wird mindestens ein Azo- und/oder ein Indanthronpigment eingesetzt, und als nicht ausbleichende Verbindung dient mindestens ein anorganisches und/oder organisches Pigment und/oder ein polymerlöslicher Farbstoff. Das gepulste LASER-Licht wird hier insbesondere mit einem gepulsten oder pulsmodifizierten, frequenzverdoppelten Nd:YAG-LASER oder einem Metalldampf-LASER oder einem Excimer-LASER erzeugt (EP-A 327 508).

Aufgabe der Erfindung ist die Bereitstellung einer schwarz eingefärbten pigmenthaltigen Kunststoff-Formmasse, die thermoplastisch zu Gegenständen verformt werden kann, welche durch Einwirkung von LASER-Strahlung mit Zeichen versehbar sind.

Die Erfindung betrifft eine Kunststoff-Formmasse, enthaltend mindestens ein organisches Polymer und mindestens ein kohlenstoffhaltiges Pigment; die Formmasse ist dadurch gekennzeichnet, daß (a) das Polymer ein thermoplastisches Polymer ist, das für Licht im Wellenlängenbereich von 180 bis 1200 nm mindestens teilweise durchlässig ist, (b) das Pigment ein mineralisches Schwarzpigment ist und (c) die Formmasse gegebenenfalls mindestens einen weiteren Zusatzstoff enthält.

Die Erfindung betrifft ferner die Verwendung der vorstehend beschriebenen Kunststoff-Formmasse als Material zur Herstellung von geformten Gegenständen, die mit Hilfe von LASER-Strahlung mit Zeichen versehen werden können.

Weiterhin betrifft die Erfindung ein Verfahren zur Herstellung eines mit Zeichen versehenen Formkörpers durch Einwirkung von LASER-Strahlung auf einen Gegenstand, der aus einer Kunststoff-Formmasse hergestellt wurde, die mindestens ein organisches Polymer und mindestens ein kohlenstoffhaltiges Pigment enthält; dieses Verfahren ist dadurch gekennzeichnet, daß man eine Kunststoff-Formmasse verwendet, die zusammengesetzt ist aus
(a) einem thermoplastischen Polymer, das für Licht im Wellenlängenbereich von 180 bis 1200 nm mindestens teilweise durchlässig ist,
(b) einem Pigment, das ein mineralisches Schwarzpigment ist, und
(c) gegebenenfalls mindestens einem weiteren Zusatzstoff,

und den Formkörper einer LASER-Strahlung mit einer Hauptwellenlänge von 1064 nm oder von 532 nm oder von 351, 308 und 248 nm aussetzt.

Das erfindungsgemäß verwendete Polymer (a) ist ein thermoplastisches Polymer, das für Licht im Wellenlängenbereich von 180 bis 1200 nm, vorzugsweise von 240 bis 1100 nm, mindestens teilweise durchlässig ist. Beispiele für solche Polymere sind Polyester, z. B. Polyethylenterephthalat und Polybutylenterephthalat, Polyarylate, Polyarylensulfide wie Polyphenylensulfid sowie Polyaryletherketone, ferner insbesondere Polyolefine, die gegebenenfalls Fluoratome enthalten, z. B. Polyethylen, Polypropylen und Polytetrafluorethylen, und Polymere mit Amid- oder Acetalgruppen in der Hauptkette; besonders bevorzugt sind Polyacetale, d. h. Oxymethylen-Homopolymere und Oxymethylen-Copolymere mit Oxyethylen-Einheiten. An Stelle eines einzelnen Polymers ist auch ein Gemisch verschiedener Polymere verwendbar.

Das Pigment (b) ist das wesentliche Merkmal der erfindungsgemäßen Kunststoff-Formmasse. Es ist ein mineralisches Schwarzpigment, das unter den Bezeichnungen Knochenkohle, Knochenschwarz und Elfenbeinschwarz bekannt ist. Es enthält 70 bis 90 Gewichtsprozent Calciumphosphat und 10 bis 30 Gewichtsprozent Kohlenstoff, vorzugsweise 75 bis 85 Gewichtsprozent Calciumphosphat und 15 bis 25 Gewichtsprozent Kohlenstoff. Der Anteil des Schwarzpigments in der Kunststoff-Formmasse beträgt 0,001 bis 10 Gewichtsprozent, vorzugsweise 0,01 bis 8 Gewichtsprozent; besonders vorteilhaft ist ein Anteil von 0,2 bis 5 Gewichtsprozent.

Die Dichte des Schwarzpigments liegt im Bereich von 2,3 bis 2,8 g·cm⁻³ vorzugsweise von 2,4 bis 2,6 g·cm⁻³. Besonders geeignet ist ein Schwarzpigment mit einem Teilchendurchmesser von 1 bis 50 µm, vorzugsweise von 2 bis 25 µm.

Die erfindungsgemäße Kunststoff-Formmasse enthält gegebenenfalls noch mindestens einen weiteren Zusatzstoff (c). Dieser Zusatzstoff ist im allgemeinen ein anorganisches Pigment, das keinen freien Kohlenstoff enthält; besonders geeignet ist Titandioxid. Der Zusatzstoff liegt in der Kunststoff-Formmasse in einer Menge von 0,01 bis 2 Gewichtsprozent, vorzugsweise von 0,01 bis 1 Gewichtsprozent, bezogen auf die Summe der Komponenten (a) und (b), vor.

Je nach Verwendungszweck können daher der Formmasse noch weitere Stoffe zugefügt werden, beispielsweise Füllstoffe wie Kreide, Glimmer, Talkum, Feldspate, Wollastonit, Aluminiumsilikat, ferner Antioxidantien, Lichtschutzmittel, Flammschutzmittel, Hitzestabilisatoren, Verstärkungsmittel, wie Glasfasern, oder Verarbeitungshilfsmittel, welche bei der Verarbeitung von Kunststoffen üblich sind.

Die Herstellung der Formmasse gemäß der Erfindung kann nach den üblichen Verfahren erfolgen. So wird z. B. die Schwarzpigmentkomponente (b) und gegebenenfalls die Komponente (c) dem Kunststoffmaterial unter Einsatz von Extrudern, Misch- oder Mahlapparaten zugemischt. Die erhaltene Mischung wird dann nach an sich bekannten Verfahren wie Pressen, Giessen, Kalandrieren, Extrudieren oder durch Spritzguß in die gewünschte endgültige Form gebracht.

Die Beschriftung mit dem Laser erfolgt derart, daß der Probenkörper in den Strahlengang eines gepulsten Lasers z. B. eines Nd:YAG-Lasers oder frequenzverdoppelten Nd:YAG-Lasers gebracht wird. Ferner ist eine Beschriftung mit einem Excimerlaser, z. B. über eine Maskentechnik möglich. Jedoch sind auch mit anderen herkömmlichen Lasertypen die gewünschten Ergebnisse zu erzielen. Die Verwendung der Kunststoff-Formmasse gemäß der Erfindung kann auf solchen Gebieten erfolgen, wo bisher übliche Druckverfahren zur Beschriftung eingesetzt wurden. So findet das Verfahren bis heute schon zur Beschriftung bzw. Markierung von Formkörpern aus thermoplastischem Material in der Elektronik- und Kraftfahrzeugindustrie Anwendung, z. B. zur Kennzeichnung von Tastaturen, Gehäusen und Einzelteilen. Diese geformten Gegenstände können dann mit Hilfe von Laser-Strahlung problemlos mit Zeichen versehen werden.

### Beispiele

### Beispiel 1

In einem handelsüblichen Extruder (ZSK 28, Firma Werner und Pfleiderer, Stuttgart, Bundesrepublik Deutschland) wurde ein homogenes Gemisch aus 99 Gewichtsteilen eines handelsüblichen Polyacetals (Copolymer aus 98 Gewichtsprozent Oxymethyleneinheiten und 2 Gewichtsprozent Oxyethyleneinheiten mit einem Schmelzindex (MFI 190/2,16) von 9 g/10 min. (DIN 53735) und einem Kristallitschmelzbereich von 164 bis 167 °C) und 1 Gewichtsteil eines handelsüblichen mineralischen Schwarzpigments (C. I. Pigment Black 9) hergestellt. Das Schwarzpigment (Knochenkohle) bestand zu 83 Gewichtsprozent aus Calciumphosphat und 17 Gewichtsprozent aus Kohlenstoff; seine Dichte betrug 25 g·cm⁻³ und seine Schüttdichte 350 kg·m⁻³, der Teilchendurchmesser lag im Bereich von 2 bis 20 µm.

Aus der erhaltenen Formmasse wurden durch Spritzgießen plattenförmige Probekörper hergestellt (120 mm x 80 mm x 2 mm). Die Probekörper wurden der Strahlung eines Nd:YAG-LASER's ausgesetzt;
a) die Pulsfrequenz betrug 15 KHz bei einer Laserleistung von ca. 20 Watt.
b) das Beschriftungsfeld des YAG-Lasers hatte einen Durchmesser von 150 mm bei einem freien Arbeitsabstand von 180 mm.

Während der Strahlungsdauer wurde der LASER-Strahl derart bewegt, daß auf den Probekörpern Schriftzeichen entstanden. Das Kontrastverhältnis betrug 28,0.

Das Kontrastverhältnis stellt den Quotienten aus der Intensität des reflektierten Lichtes der Kunststoffplatte bei Beleuchtung mit weißem Licht (Schwanenhalslampe KL 1 SOB, Fa. Schott, Mainz, Bundesrepublik Deutschland) und der des reflektierten Lichtes eines mit dem Laser ergänzten Zeichens (Quadrat der Fläche 20·20 mm²) dar, wobei die Werte mit Hilfe einer Photozelle (Typ BPW 27, erhalten wurden.

### Beispiele 2 bis 4

Beispiel 1 wurde wiederholt, wobei unterschiedliche Mengen des Schwarzpigments eingesetzt wurden. An den beschrifteten Probekörpern wurde jeweils das Kontrastverhältnis ermittelt. Die Einzelheiten zeigt Tabelle 1.

**Tabelle 1**

| Beispiel | Menge des Schwarzpigments | Kontrastverhältnis |
|---|---|---|
| 2 | 0,2 Gew.-% | 13,2 |
| 3 | 0,4 " | 36,0 |
| 4 | 5,0 " | 17,5 |

### Beispiel 5

Beispiel 1 wurde wiederholt, wobei in die Formmasse zusätzlich noch 0,1 Gewichtsteil Titandioxid eingemischt wurde. Das Kontrastverhältnis betrug 22,3.

### Vergleichsbeispiele

Beispiel 1 wurde wiederholt, wobei an Stelle der Knochenkohle verschiedene herkömmliche Rußarten eingesetzt wurden. An den beschrifteten Probekörpern wurde jeweils das Kontrastverhältnis ermittelt. Einzelheiten sind aus Tabelle 2 ersichtlich.

**Tabelle 2**

| Versuch | Rußart- u. -menge | Zusatzstoff/Menge | Kontrastverhältnis |
|---|---|---|---|
| a | ®Acetogenruß*/1 Gew.-% | - | 13,5 |
| b | ®Printex 90**/1 Gew.-% | - | 5,0 |
| c | ®Acetogenruß/1 Gew.-% | TiO₂/0,1 Gew.-% | 15,5 |

| | | | |
|---|---|---|---|
| *AV (Hersteller Hoechst AG, Frankfurt a. M., Bundesrepublik Deutschland) | | | |
| ** (Hersteller Degussa AG, Frankfurt a. M., Bundesrepublik Deutschland) | | | |

## Patentansprüche

1. Kunststoff-Formmasse, enthaltend mindestens ein organisches Polymer und mindestens ein kohlenstoffhaltiges Pigment, dadurch gekennzeichnet, daß (a) das Polymer ein thermoplastisches Polymer ist, das für Licht im Wellenlängenbereich von 180 bis 1200 nm mindestens teilweise durchlässig ist, (b) das Pigment Knochenkohle, Knochenschwarz oder Elfenbeinschwarz ist und (c) die Formmasse gegebenenfalls mindestens einen weiteren Zusatzstoff enthält.

2. Kunststoff-Formmasse nach Anspruch 1, dadurch gekennzeichnet, daß das thermoplastische Polymer (a) ein gegebenenfalls Fluoratome enthaltendes Polyolefin oder ein Polymer mit Amid- oder Acetalgruppen in der Hauptkette ist.

3. Kunststoff-Formmasse nach Anspruch 1 oder 2, dadurch gekennzeichnet, daß das thermoplastische Polymer (a) ein Polyoxymethylen ist, vorzugsweise ein Oxymethylencopolymer.

4. Kunststoff-Formmasse nach einem oder mehreren der Ansprüche 1 bis 3, dadurch gekennzeichnet, daß die Menge des Pigments (b) 0,001 bis 10 Gewichtsprozent (bezogen auf die Kunststoff-Formmasse) beträgt.

5. Kunststoff-Formmasse nach einem oder mehreren der Ansprüche 1 bis 4, dadurch gekennzeichnet, daß das Pigment (b) 70 bis 90 Gewichtsprozent Calciumphosphat und 30 bis 10 Gewichtsprozent Kohlenstoff enthält.

6. Kunststoff-Formmasse nach einem oder mehreren der Ansprüche 1 bis 5, dadurch gekennzeichnet, daß der Teilchendurchmesser des Pigments (b) im Bereich von 1 bis 50 µm liegt.

7. Kunststoff-Formmasse nach einem oder mehreren der Ansprüche 1 bis 6, dadurch gekennzeichnet, daß das Pigment (b) im Gemisch mit Komponente (c), einem anorganischen Pigment, das keinen freien Kohlenstoff enthält, vorzugsweise Titandioxid, vorliegt.

8. Verwendung der Kunststoff-Formmasse gemäß Anspruch 1 als Material zur Herstellung von geformten Gegenständen, die mit Hilfe von LASER-Strahlung mit Zeichen versehen werden.

9. Verfahren zur Herstellung eines mit Zeichen versehenen Formkörpers aus einer Kunststoff-Formmasse durch Einwirkung von LASER-Strahlung, wobei die Formmasse mindestens ein organisches Polymer und mindestens ein kohlenstoffhaltiges Pigment enthält, dadurch gekennzeichnet, daß man eine Kunststoff-Formmasse verwendet, die (a) ein thermoplastisches Polymer, das für Licht im Wellenlängenbereich von 180 bis 1200 nm mindestens teilweise durchlässig ist, (b) einem Pigment, das Knochenkohle, Knochenschwarz oder Elfenbeinschwarz und (c) gegebenenfalls mindestens einem weiteren Zusatzstoff enthält, und den Formkörper einer LASER-Strahlung aussetzt.

10. Verfahren gemäß Anspruch 9, dadurch gekennzeichnet, daß eine Laser-Strahlung mit einer Hauptwellenlänge von 1064 nm oder 532 nm oder von 351, 308 und 248 nm verwendet wird.

## Claims

1. A plastic molding composition containing at least one organic polymer and at least one carbon-containing pigment, wherein (a) the polymer is a thermoplastic polymer which is at least partially transparent to light in the wavelength range from 180 to 1200 nm, (b) the pigment is animal charcoal, bone black or ivory black, and (c) the molding composition may contain at least one further additive.

2. A plastic molding composition as claimed in claim 1, wherein the thermoplastic polymer (a) is a polyolefin, which may contain fluorine atoms, or a polymer containing amide or acetal groups in the main chain.

3. A plastic molding composition as claimed in claim 1 or 2, wherein the thermoplastic polymer (a) is a polyoxymethylene, preferably an oxymethylene copolymer.

4. A plastic molding composition as claimed in one or more of claims 1 to 3, wherein the amount of the pigment (b) is from 0.001 to 10 percent by weight (based on the plastic molding composition).

5. A plastic molding composition as claimed in one or more of claims 1 to 4, wherein the pigment (b) contains from 70 to 90 percent by weight of calcium phosphate and from 30 to 10 percent by weight of carbon.

6. A plastic molding composition as claimed in one or more of claims 1 to 5, wherein the particle diameter of the pigment (b) is in the range from 1 to 50 µm.

7. A plastic molding composition as claimed in one or more of claims 1 to 6, wherein the pigment (b) is mixed with component (c), an inorganic pigment containing no free carbon, preferably titanium dioxide.

8. The use of a plastic molding composition as claimed in claim 1 as a material for the production of shaped articles which can be provided with symbols with the aid of laser radiation.

9. A process for the production of a molding provided with symbols from a plastic molding composition through the action of laser radiation, where the molding composition contains at least one organic polymer and at least one carbon-containing pigment, which comprises using a plastic molding composition which contains (a) a thermoplastic polymer which is at least partially transparent to light in the wavelength range from 180 to 1200 nm, (b) a pigment which is animal charcoal, bone black or ivory black, and (c) if desired at least one further additive, and exposing the molding to laser radiation.

10. The process as claimed in claim 9, wherein laser radiation having a principal wavelength of 1064 nm or 532 nm or of 351, 308 and 248 nm is used.

## Revendications

1. Matière plastique à mouler contenant au moins un polymère organique et au moins un pigment contenant du carbone, caractérisée en ce que (a) le polymère est un polymère thermoplastique qui est transparent au moins en partie à la lumière dans le domaine des longueurs d'onde de 180 à 1200 nm, (b) le pigment est le noir d'os, le noir animal ou le noir d'ivoire et (c) la masse à mouler contient éventuellement encore un autre additif.

2. Matière plastique à mouler selon la revendication 1, caractérisée en ce que le polymère thermoplastique (a) est une polyoléfine contenant éventuellement des atomes de fluor ou un polymère contenant des groupes amido ou acétal dans la chaîne principale.

3. Matière plastique à mouler selon la revendication 1 ou 2, caractérisée en ce que le polymère thermoplastique (a) est une polyoxyméthylène, de préférence un copolymère d'oxyméthylène.

4. Matière plastique à mouler selon une ou plusieurs des revendications 1 à 3, caractérisée en ce que la quantité de pigment (b) est de 0,001 à 10 % en poids (par rapport à la matière plastique à mouler).

5. Matière plastique à mouler selon une ou plusieurs des revendications 1 à 4, caractérisée en ce que le pigment (b) contient de 70 à 90 % en poids de phosphate de calcium et de 30 à 10 % en poids de carbone.

6. Matière plastique à mouler selon une ou plusieurs des revendications 1 à 5, caractérisée en ce que le diamètre des particules du pigment (b) est compris entre 1 et 50 µm.

7. Matière plastique à mouler selon une ou plusieurs des revendications 1 à 6, caractérisée en ce que le pigment (b) est présent en mélange avec le composant (c), un pigment inorganique qui ne contient pas de carbone libre, de préférence le dioxyde de titane.

8. Utilisation d'une matière plastique à mouler selon la revendication 1 comme matière pour préparer des objets façonnés que l'on peut inscrire par un rayon laser.

9. Procédé pour la préparation d'un objet façonné en matière plastique à mouler qui porte des inscriptions sous l'effet d'un rayon laser, la matière à mouler contenant au moins un polymère organique et au moins un pigment contenant du carbone, caractérisé en ce que l'on utilise une matière plastique à mouler qui contient (a) un polymère thermoplastique qui est transparent au moins en partie à la lumière dans le domaine des longueurs d'onde de 180 à 1200 nm, (b) un pigment qui est le noir d'os, le noir animal ou le noir d'ivoire et (c) éventuellement au moins un autre additif, et on expose l'objet façonné à un rayonnement laser.

10. Procédé selon la revendication 9, caractérisé en ce que l'on utilise un rayonnement laser dont la longueur d'onde principale est de 1064 nm ou de 532 nm, ou de 351, 308 et 248 nm.
